# EUROPEAN PATENT APPLICATION

(11) **EP 4 400 946 A1**
(43) Date of publication of application: **17.07.2024**
(21) Application number: 23163578.0
(22) Date of filing: 22.03.2023
(51) Int. Cl.: G06F 3/01, G06F 1/16, G06F 3/14

(54) **TOUCHLESS USER INTERFACE CONTROL METHOD BASED ON A HANDHELD DEVICE**

(30) Priority: 12.01.2023 EP 23151423
(71) Applicant: AMERIA AG, 69124 Heidelberg (DE)
(72) Inventor: Seiler, Martin, 79238 Ehrenkirchen (DE); Ensslen, Christian, 70469 Stuttgart (DE); Hixon, Dennis, 74931 Lobbach (DE); Schneider, Franziska, 76275 Ettlingen (DE); Rothvoss Buchheimer, Maria, 69214 Eppelheim (DE); Metter, Albrecht, 69120 Heidelberg (DE)
(74) Representative: Best, Bastian

(57) **Abstract**

A handheld device for providing a touchless user interface, the handheld device comprising: at least one depth sensing device which enables the handheld device to provide a spatial input area serving as a spatial user interface enabling a user person to provide touchless user input to a scene displayed by an essentially stationary display means, wherein the at least one depth sensing device is configured to observe the spatial input area and to capture touchless user input provided by the user person using an input object; means configured to generate at least one control command based on captured touchless user input, wherein the at least one control command is configured to cause modifying the displayed scene in accordance with the at least one control command.

## Description

### TECHNICAL FIELD

The present invention generally relates to controlling a touchless user interface, and more particularly to a handheld device for providing a touchless user interface for controlling an essentially stationary display means via touchless user input. Further, the present invention relates to a touchless user interface control method using said handheld device. Further, the present invention relates to a computer program for carrying out the touchless user interface control method.

### BACKGROUND

Display means have nowadays become omnipresent in various areas of modern life. Examples include electronic display screens or electronic display projectors in public places which provide useful information to the user, e. g., in shopping malls, trade shows, train stations, airports, and the like, a field which is commonly termed "digital signage". Other examples include the use of said displays for presentations, lectures or the like. Presentations and lectures may be performed in private environments, such as at home using a large screen display, e.g., a television device. Also, presentations and lectures may be performed in public environments, e.g., in schools, universities and other educational institutions. Further, display means are omnipresent in the private environment of end users. Examples, among others, are: Monitors, televisions, projectors, for example, in a home theater.

In most applications it is desired to point at specific areas on the display in order to point at particularities of a displayed scene, e.g., by catching the attention of the audience to specific parts of a displayed scene during a presentation. Further, in most applications there may also be a need to control the displayed scene, e.g., by clicking on control elements to switch one presentation slide to the next presentation slide of a displayed slide deck, or by freehand drawing .

With respect to the first desire, i.e., pointing to specific areas, it is often not possible to conveniently use the hand or a telescopic rod for several reasons. On the one hand, the display is often too large for conveniently pointing by a user's hand or by a telescopic rod, and on the other hand, pointing directly at specific areas of a displayed scene by a user's hand or by a telescopic rod forces the user to stand away from the audience and close to the display and also it forces the user to turn away from the audience since it is not possible to look at the audience and the display at the same time.

With respect to the second desire, i.e., controlling the displayed scene, there is also no convenient solution for the user. Often, the mouse or keyboard of a computer is used to control the displayed scene, which is not very convenient during a presentation.

An existing solution which tries to combine these two needs is the so-called presenter device which includes a laser pointer for pointing at specific areas of a scene, and physical buttons or touch buttons for controlling the displayed scene. Such presenter devices have various disadvantages.

Firstly, a laser pointer cannot be used to show something on every display, depending on the display type. For example, a generated dot of a laser pointer cannot be seen well on an LCD or LED display.

Secondly, the functionality of said physical buttons is often limited to "clicking" from one presentation slide to the next presentation slide of a slide deck. It is, e.g., generally not possible to provide freehand drawings on a presentation slide.

Thirdly, not least because of the recent COVID-19 pandemic, users have become hesitant to use physical control means when multiple people interact may use them. Therefore, physical buttons or touch buttons are not preferred.

Fourthly, as for presentations, a high precision of input is desirable which cannot be provided by said presenter devices. Rather, said presenter devices, first need to be aligned with the displayed scene by randomly activating the laser until seeing the laser dot and subsequently positioning the laser dot at a desired area on the displayed scene.

Fifthly, the usability of such presenter devices is not very high, especially since there are numerous different presenter devices with different key positions and key configurations, so that a user must first familiarize with them before starting a presentation. In other words, the user experience is not intuitive.

Therefore, there is a need to provide a device and a method that fulfills at least partially said requirements and at the same time provides a positive user experience. Existing solutions are either not suitable for above-mentioned applications or are not convenient due to non-intuitive control configurations.

It is therefore the technical problem underlying the present invention to provide an improved device for providing a user with a touchless user interface and to provide a touchless user interface control method, thereby overcoming the above-mentioned disadvantages of the prior art at least in part.

### SUMMARY OF INVENTION

The problem is solved by the subject-matter defined in the independent claims. Advantageous modifications of embodiments of the invention are defined in the dependent claims as well as in the description and the figures.

According to a first aspect of the present invention, a handheld device may be provided. The handheld device may comprise at least one depth sensing device which may enable the handheld device to provide a spatial input area serving as a spatial user interface enabling a user person to provide touchless user input to a scene displayed by a display means, preferably an essentially stationary display means. The at least one depth sensing device may therefore be configured to observe the spatial input area and to capture touchless user input provided by the user person using an input object. The handheld device may comprise means configured to generate at least one control command based on the captured touchless user input in order to modify the displayed scene in accordance with the at least one control command.

The starting point for using a handheld device according to the first aspect of the present invention is displaying, using an essentially stationary display means, a scene which is visually perceptible by a user person. Examples for essentially stationary display means are projector assemblies including a projector and a projection surface, electronic display screens such as LCD screens or LED screens, and holographic display means.

The essentially stationary display means may in particular be a large display means, for example having a display size of more than 50 inches, preferably more than 60 inches, preferably more than 70 inches, preferably more than 80 inches, preferably more than 90 inches, preferably more than 100 inches, preferably more than 120 inches, preferably more than 150 inches, preferably more than 200 inches. The essentially stationary display means may in particular have a size such that an average user person is not able to reach every part of a displayed scene using a hand for the purpose of pointing at a specific area of the scene.

Display means of such big size are particularly advantageous for presentations. Therefore, the scene displayed by the display means may for example include content such as presentation slides, photos, videos, text, diagrams, or the like. The display means, despite their bulky size, can be conveniently and intuitively operated by means of the present invention, which is described in more detail below.

The handheld device may be understood as a portable device having at least one depth sensing device. In particular, the mobile device may be a portable end-user device. The handheld device is configured to provide the user person with a user interface which is a spatial user interface for interacting with a displayed scene which is displayed by the display means without requiring a physical touch. The term touchless user interface and spatial user interface may therefore be understood as synonyms. For this purpose, the handheld device includes the at least one depth sensing device which observes a spatial input area which preferably builds the spatial user interface. Accordingly, the at least one depth sensing device may capture touchless user input provided by the user person within the spatial input area.

Preferably, the at least one depth sensing device may be integrated in the handheld device, e.g., being arranged in parts of a housing of the handheld device or being connected via a connection interface with the handheld device. Alternatively, the at least one depth sensing device may be mounted at a housing of the handheld device being an external unit.

The term spatial input area may be understood as comprising or being a virtual plane defined in space which virtual plane may form a virtual touchpad which does not require physical touch during a user interaction. Alternatively or additionally, the term spatial input area may be understood as a space within which user interaction is captured, as described above. The spatial input area, preferably the virtual plane, may be essentially parallel to the scene displayed by the display means, preferably essentially parallel to the display means. Alternatively or additionally, the spatial input area, preferably the virtual plane, may be essentially perpendicular to a part of a housing of the handheld device. Alternatively or additionally, the spatial input area, preferably the virtual plane, may be tilted, i.e., inclined, with respect to the scene displayed by the display means, preferably tilted, i.e., inclined, with respect to the display means. In case if the spatial input area, preferably the virtual plane, is tilted with respect to the scene and/or the display means, the spatial input area may have a spatial orientation that is particularly convenient for the user person for providing user input. It may be provided that the user person is provided with a control option to adjust the spatial orientation of the spatial input area.

Advantageously, the handheld device may be configured to at least partially make the spatial input area in space recognizable for the user person, preferably by showing a virtual representation of the spatial input area on a visual control aid of the handheld device. Such visual control aid may include or be equal to an electronic display, a light emitting means and/or other suitable means.

The term touchless user input may include any touchless action performed by a user person intending to interact with a displayed scene. Touchless user input may be provided by a user person using an input object. The input object may be any kind of suitable input object such as a hand or a finger of a user person, a dedicated input device which may for example be a pen or a spherical device.

The handheld device, including the at least one depth sensing device, may be separate from the essentially stationary display means, in particular being arranged separately. For example, the handheld device and the essentially stationary display means may not have a physical contact, e.g., with respect to their housings.

Advantageously, the handheld device, preferably next to which the user provides user input, and the essentially stationary display means may be spaced apart from each other, e.g., in such manner that the user person is able to see the entire scene which is displayed by the display means essentially without moving the user person's body, in particular essentially without moving the user person's head, and/or in such manner that a different person may move between the location of the handheld device and the essentially stationary display means, and/or is such manner that the distance between the handheld device and the essentially stationary display means is more than 1 meter, preferably more than 1,5 meters, preferably more than 2 meters, preferably more than 3 meters, preferably more than 4 meters, preferably more than 5 meters, preferably more than 7 meters, preferably more than 10 meters.

In a preferred embodiment, a holding structure is provided, wherein the handheld device may be positioned by means of the holding structure. The holding structure may be spatially disposed essentially in front of the essentially stationary display means and may be configured to hold the handheld device in a predetermined position with respect to the display means.

The at least one depth sensing device may be a sensor device, a sensor assembly or a sensor array which is able to capture the relevant information in order to translate a movement and/or position and/or orientation of an input object, in particular of a user's hand, into control commands. In particular, depth information may be capturable by the depth sensing device. It may be placed such as to observe the spatial input area. In a preferred embodiment, at least two depth sensing devices are provided and placed such as to observe the spatial input area. Preferably, if at least two depth sensing devices are used, the depth sensing devices may be arranged having an overlap in their field of view, each at least partially covering the spatial input area. The depth sensing device may preferably be a depth camera. An example for a depth camera is the Intel RealSense depth camera.

The at least one depth sensing device may, as described above, be part of the handheld device or be integrated in the mobile device, e.g., as a standard equipment. In a preferred embodiment, the at least one depth sensing device is integrated on the front side of the handheld device where also an above-mentioned visual control aid may be situated. Therefore, of course also the at least one depth camera and the essentially stationary display means may be spaced apart from each other in the same manner as described above with respect to the handheld device and the essentially stationary display means.

The term control command may be understood as any command that may be derived from a user input. In particular, a control command may be generated based on a translation of a captured user input into a control command. Examples for control commands are "show hovering pointer which overlays the current scene" or "switch to the next page or slide in the presentation".

The term modifying the displayed scene may be understood as any modification of a displayed scene which is caused by a captured user input, i.e., by generated control commands which were generated based on captured user input, as described above. Examples for modifications of a displayed scene are: Showing a hovering pointer which overlays a current scene; turning a page to the next one; switching from a currently shown slide to a next slide of a presentation; overlay a current scene with a freehand drawing; mark specific keywords; zoom in; zoom out; scroll up; scroll down; scroll to the left; scroll to the right; and the like.

Generating at least one control command may be performed based on at least a part of the captured orientation and/or position and/or movement of an input object which the user person uses for providing user input, in particular based on an underlying control scheme. The input object may for example be the user's hand. Said control scheme may include information about which respective orientation and/or position and/or movement of the input object should be translated into which control commands.

It may be provided that the control scheme is predefined. Optionally, at least two control schemes are predefined and available for the user person to choose from. Alternatively or additionally, the control scheme may at least partially be adaptable by the user person. By that, the control scheme can be tailored to the user person's needs, preferences and physical abilities, for example if the user person is handicapped. This increases the versatility of the present invention and creates a wide range of possible usage options.

It may be provided that the control commands include at least two control command types, preferably including hovering pointer commands and gesture input commands. These control command types are described in further detail below.

It may be provided that the spatial input area and captured user input which is performed within the spatial input area is mapped to the displayed scene. The spatial input area may be defined to be a virtual plane in space. The mapping may follow one or more rules.

In a first example, the spatial input area may have essentially the same width-to-height ratio as the displayed scene, and preferably as the display means. Described in formulas, the width-to-height ratio of the spatial input area is r and the width-to-height ratio of the scene and/or display device is R, with r = R. In this example, the spatial input area may be mapped to the displayed scene and/or to the display means essentially without changing the width-to-height ratio.

In a second example, the spatial input area may have a different width-to-height ratio than the displayed scene, and preferably as the display means. Described in formulas, the width-to-height ratio of the spatial input area is r and the width-to-height ratio of the scene and/or display device is R, with r ≠ R. In this example, mapping may follow underlying mapping rules which fit the different width-to-height ratios to one another in order to provide an optimum user experience.

The handheld device may be connected to the display means in order to communicate with each other. The connection may be wired or wirelessly. The display means and/or handheld device may comprise a computer as a main processing unit for the present invention.

The above-mentioned visual control aid may in a preferred embodiment be an electronic display of the handheld device. Examples for suitable electronic displays are the following: LED display, AMOLED display, Retina display. The electronic display may be far smaller than the display means. On the electronic display, a visual control aid may be displayed to the user person. The visual control aid may provide the user person with an indication of captured user input. Examples and particular embodiments of various visual control aids are described in more detail below.

The present invention is applicable to various fields of application and is particularly advantageous for presenting content to participant persons and/or an audience. In particular, experience and testing have shown that the intuitively designed touchless user interface control method according to the present invention provides an appealing and easy to learn user experience. Further, based on the control commands, pointing to specific areas on a scene as well as controlling a scene, is combined in one single control scheme which is provided by the present invention.

Especially for large screens, the present invention provides a high benefit over the prior art because even though the user person and the handheld device are spaced apart from the display means, it is still possible to process user input.

Generating at least one control command based on orientation and/or position and/or movement of an input object, e.g., a user person's hand, is particularly smooth and can be performed continuously without interruptions, jumps or leaps, if the input object is detected and successively tracked during a user interaction. In other words, an input object may be detected and the step of capturing user input may be locked to the detected input object. Thus, during an interaction of the user person, the input object or hand may move around and change continuously its position which may occasionally result in control interruptions and thus negatively affect the user experience. By detecting and tracking the input object, such interruptions are avoided for the benefit of the user experience. Once the input object is detected, losing or confusing the input object with other body parts or objects is efficiently avoided.

For detecting the input object and locking the input object for the purpose of capturing user input, a locking condition may be required to be met. Such locking condition may require the user person to perform a specific user input, such as a gesture, successive gestures, pressing a button, input voice commands and/or the like. For example, a detected hand of a user person may be initially displayed on the display means before the locking condition is met, so that the user person can easily see and decide whether the correct hand which is intended for interaction is detected and locked. Based on the initially displayed hand, the user person may perform a gesture, for example a double click gesture moving the hand back and forth, if such gesture is set to be the locking condition. After locking the input object or the hand, the at least one depth sensing device may seamlessly continue tracking the input object upon re-entering the input object into the spatial input area, after the input object was previously moved out of the spatial input area. This can be realized by detecting and processing at least partially the shape of the input object or by detecting and processing one or more characteristics of the user person's input object, e.g., hand.

It may be provided that the user person can choose between different locking conditions and/or define individual locking conditions. For example, old persons may not be able to perform certain gestures, such as fast double click gestures, due to handicaps. By the individualization option with respect to the association condition, the usability is enhanced.

It may be provided that the input object is a hand of the user person. In particular, the user person may use the user person's index finger to intuitively provide user input.

It may be provided that the visual control aid includes a visual indication of the approximate position of the input object and/or the approximate direction in which the input object points.

Said visual indication of the approximate position and/or pointing direction of the input object may be implemented in various forms. In a first example, the visual indication may be a dot shown on the visual control aid being an electronic display of the handheld device, wherein the dot moves on the electronic display to indicate the position of the input object and/or wherein the dot changes its shape to indicate the direction in which the input object points. The change in shape may, e.g., include a small arrow or triangle in the middle of the dot or on one side of the dot which corresponds to the direction in which the input object points. In a second example, the visual indication may be a triangle or arrow, wherein the triangle or arrow moves on the electronic display to indicate the position of the input object, and/or wherein the triangle or arrow changes its pointing direction to indicate the direction in which the input object points. Alternative and more convenient options to realize the visual indication are described in the following.

It may be provided that the visual control aid includes, i.e., displays, a visually perceptible virtual representation, preferably illustration, of the input object that the user person uses for providing user input, optionally wherein the input object is a user person's hand and the virtual representation having the shape of a hand.

For this purpose, for example, the input object may be rendered and displayed corresponding to the real input object. In case that the input object is a user person's hand, the shape of the hand may be rendered and displayed by the handheld device, i.e., using the visual control aid being an electronic display. The virtual representation of the input object may preferably be a 3D-illustration. This is particularly easy to understand also for unexperienced user persons and therefore provides an intuitive user experience.

It may be further provided that the visual control aid includes, i.e., displays, a visually perceptible virtual representation of the spatial input area, wherein the approximate position of the input object and/or the approximate direction in which the input object points is indicated with respect to the virtual representation of the spatial input area.

An example for such visually perceptible virtual representation of the spatial input area is a 3D-plane which is shown on the visual control aid being an electronic display. Such 3D-plane may have for example a square or rectangular shape. The 3D-plane may further be shown as a grid in order to visualize the spatial input area more clearly.

It may be provided that the visual control aid being an electronic display displays a scene which essentially corresponds, preferably which is identical, to the scene displayed by the essentially stationary display means.

Of course, the scene displayed by the display means may for example be a stream of the scene displayed by the handheld device, i.e., by the visual control aid being an electronic display of the handheld device. Thus, the scene displayed on the electronic display and the scene displayed on the display means may be the same. In this case, the above-mentioned visual indication and/or virtual representation of the input object and/or the virtual representation of the spatial input area may overlay the scene displayed on the electronic display of the handheld device.

It may be provided that the above-mentioned visual indication and/or virtual representation of the input object and/or the virtual representation of the spatial input area are only shown by the visual control aid being an electronic display of the handheld device and not shown by the essentially stationary display means. Instead, it may be provided that while the electronic display of the handheld device shows the above-mentioned visual indication and/or virtual representation of the input object and/or the virtual representation of the spatial input area, the display means shows the scene and an overlaying pointer, i.e., cursor. The position and/or shape and/or color of the overlaying pointer, i.e., cursor may be dependent on the user input, i.e., the generated at least one control command and thus be in analogy to the visual indication and/or virtual representation of the input object and/or the virtual representation of the spatial input area which are only shown on the electronic display of the handheld device.

If the handheld device comprises a visual control aid, preferably being an electronic display, it may show information to the user person for supporting the user person in performing user input, thus enhancing the user experience. Further, this feature significantly reduces the need to become familiar with the control method in beforehand.

It may be provided that the handheld device has a size that essentially fits into a pocket of a garment, preferably wherein the handheld device's volume is preferably less than 400 cm³, preferably less than 300 cm³, preferably less than 200 cm³, preferably less than 150 cm³, preferably less than 100 cm³, preferably less than 80 cm³, preferably less than 60 cm³.

It may be provided that the handheld device has a weight less than 2 kg, preferably less than 1.5 kg, preferably less than 1 kg, preferably less than 0.7 kg, preferably less than 0.5 kg, preferably less than 0.3 kg, preferably less than 0.2 kg, preferably less than 0.1 kg.

It is particularly advantageous to use a handheld device which is small and/or light because it is portable and easy to use. Therefore, especially if a processing unit is situated in the handheld device, retrofitting of essentially stationary display means to use a touchless control interface is particularly easy.

It may be provided that the handheld device is foldable. In particular, the handheld device may comprise a folding mechanism that facilitates the handheld device being foldable.

Advantageously, a foldable handheld device can be easily carried in a pocket or a small bag, making it highly portable. Further, if the handheld device comprises an electronic display, e.g., building a visual control aid, an increased screen size of the electronic screen becomes possible. Thus, the user person may enjoy a larger screen size when needed without sacrificing portability. Further, foldable devices have an improved durability compared to traditionally designed devices because they cover sensitive parts in order to prevent damage. In particular, the at least one depth camera may be covered in such manner in order to prevent the at least one depth camera to get damaged or dirty.

It may be further provided that the handheld device comprises at least one mechanical hinge that allows the handheld device to be folded.

Mechanical hinges are more durable than other types of hinges, such as flexible material. This is due to the fact that a mechanical hinge provides additional support stiffness to the handheld device, including a clearly recognizable end position in an unfolded state and a clearly recognizable end position in a folded state. Further, mechanical hinges are very easy to use and allow for an easy, smooth and intuitive folding/unfolding experience. This makes it more user-friendly than a device with a complex folding mechanism. Further, a mechanical hinge is cost-effective compared to more complex hinging mechanisms, as well as it is a simpler and less expensive mechanism to produce and maintain.

It may be provided that the folding mechanism, in particular the mechanical hinge, comprises a locking means. The locking means may be designed such that the handheld device may be locked in a folded state such that only user persons having the permission to unfold are able to unfold the handheld device for making use of it. The locking mechanism may be a combination lock or a mechanical lock which is unlockable using a key. Alternatively of additionally, a biometric unlocking mechanism may be provided, such as a fingerprint sensor and/or a face recognition sensor.

By incorporating a locking mechanism, the handheld device is more secure against unauthorized access or use. This is especially important for devices that may contain sensitive or confidential information. Further, when the device is folded and locked, it is protected from accidental drops or impacts. Thus, this feature can help to extend the lifespan of the device and reduce the risk of damage. Further, user persons can easily carry the device in a folded state without the risk of accidentally opening it. This makes it more convenient to transport and store the device, especially when traveling.

It may be provided that the handheld device includes at least one base part which is configured to be placed on a surface, such as a desk, a table, a stand, a holding structure and/or the like.

The base part provides stability to the handheld device, reducing the risk of it being knocked over or slipping off the surface. Further, it may be provided that the base part also includes built-in charging capabilities, allowing the handheld device to charge while it is being used or stored on the surface.

It may be provided that the handheld device comprises at least two physical framing means which at least partially indicate the spatial input area by at least partially framing the spatial input area.

By indicating the spatial input area, users can more easily and intuitively interact with the handheld device, resulting in a better user experience overall. Further, the physical framing means can help to reduce errors and unintended inputs, as user persons are guided towards the correct input area. Further, the physical framing means can be particularly useful for user persons with partial visual impairments or other disabilities, as they provide a clear visual indication of the input area.

It may be provided that the framing means may be foldable tower structures which are connected, preferably via hinges, to the base part.

In other words, the handheld device may have a similar structure like a glasses. Figuratively speaking, the two arms of the frame of the glasses would be the foldable tower structures and the part of the frame that rests on the nose and holds the lenses would be the base part.

In each of the tower structures, a depth sensing device may be integrated or mounted. Further, the base part of one of the tower structures may comprise a processing unit including wireless connectivity interface(s) and means for processing captures image data of the depth sensing device in order to generate at least one control command and in order to modify a scene displayed on a display means which may be spaced apart from the handheld device.

It may be provided that in each of the tower structures, a depth sensing device is integrated or mounted.

It may be provided that the base part (101), at least one of the physical framing means (102) and/or at least one of the tower structures comprises a processing unit including wireless connectivity interface(s) and means for processing captured image data of the at least one depth sensing device in order to generate at least one control command and in order to modify a scene displayed on the essentially stationary display means. The essentially stationary display means may be arranged spaced apart from the handheld device, as described above.

It may be provided that the handheld device comprises at least two depth sensing devices, each configured for at least partially observing the spatial input area and capturing user input, wherein a combination of the captured data of the at least two depth sensing devices is performed in order to recognize the user input and to generate control command(s) based on the user input, optionally wherein the depth sensing devices are depth cameras
Using at least two, preferably more than two depth sensing devices advantageously enhances the precision of capturing user input. This is due to the fact that each depth sensing device may observe at least part of the spatial input area, i.e., some parts of the spatial input area may be even observed by more than one depth sensing device. The captured image data from different depth sensing devices may be overlayed, i.e., merged together in order to get a high resolution of captured user input in the spatial input area.

It may be provided that the spatial input area is or comprises a virtual plane defined in space which virtual plane may form a virtual touchpad which does not require physical touch during a user interaction.

The virtual plane may have boundary limits which at least partially delimit the spatial input area. In particular, if the visual control aid, as described above, includes a visually perceptible virtual representation of the spatial input area, this virtual representation may consist of or comprise an illustration of said boundary limits.

It may be further provided that during a user interaction in which touchless user input is captured which is provided by the user person via the input object, preferably a hand of the user person, the captured distance of the input object with respect to the virtual plane and the position of the input object relative to the plane and/or the movement of the input object relative to the plane is processed and generating at least one control command is performed based thereon.

It may be provided that one or more of the following types of control commands may be generated based on user input:
hovering pointer commands causing modifying the displayed scene by displaying a hovering pointer which overlays the scene in a respective position, preferably wherein a captured user input is determined to be a hovering pointer command if the user points with at least a portion of the user person's hand within the spatial input area;
gesture input commands, such as click input, scrolling commands and/or the like, causing modifying the displayed scene in that said scene changes according to the gesture, preferably wherein a captured user input is determined to be a gesture input command if the user person performs a gesture movement with the user person's hand within the spatial input area.

The types of control commands may be defined in a control scheme, as described above. In particular, said control scheme may include information about which respective orientation and/or position and/or movement of the input object should be translated into which control commands. It may be provided that the control scheme is predefined. Optionally, at least two control schemes are predefined and available for the user person to choose from. Alternatively or additionally, the control scheme may at least partially be adaptable by the user person.

One example for a user input which causes generating a hovering pointer command is that the input object is moved with respect to the spatial input area while essentially not penetrating more than a threshold value in the direction perpendicular to a virtual plane of the spatial input area and/or in the direction perpendicular to the scene displayed by the display means.

One example for a user input which causes generating a gesture input command being a click input command is that the input object is moved in the direction perpendicular to a virtual plane of the spatial input area and/or in the direction perpendicular to the scene displayed by the display means wherein the movement exceeds a threshold. Preferably, also a double click input command may be provided by performing said movement twice within a predefined time period.

As described above, the spatial input area, preferably the virtual plane, may be essentially parallel to the scene and/or to the display means. Alternatively or additionally, the spatial input area, preferably the virtual plane, may be tilted, i.e., inclined, with respect to the scene displayed by the display means, preferably tilted, i.e., inclined, with respect to the display means. In case if the spatial input area, preferably the virtual plane, is tilted with respect to the scene and/or the display means, the spatial input area may have a spatial orientation that is particularly convenient for the user person for providing user input. Thus, it may be provided that the user person is provided with a control option to adjust the spatial orientation of the spatial input area. Said control option may be provided by the handheld device and/or by at least one of the at least one depth camera(s), e.g., by providing a physical button or touch button or by providing predefined gestures which the user person may perform in order to change the spatial orientation of the spatial input area. Further, it may be provided that the above-mentioned hovering input command(s) and gesture input command(s) are automatically adjusted depending on the spatial orientation of the spatial input area. In other words, it may be provided that the spatial orientation of the spatial input area, preferably being a virtual plane in space, is adjustable by the user person, wherein capturing user input and/or generating at least one control command is performed considering the spatial orientation of the spatial input area.

It may be provided that the spatial input area, preferably being defined as a virtual plane defined in space, is mapped to the displayed scene and captured user input is mapped accordingly. Mapping may be performed, as described in detail above.

It may be provided that the handheld device, preferably including the at least one depth sensing device, is operable in a sleep-mode and in an active-mode, wherein in the sleep-mode, the handheld device, in particular at least one of the at least one depth sensing device(s) is at least partially deactivated in order to save energy and switches into the active-mode in response to a wakeup user action, optionally wherein the handheld device automatically switches from the active-mode into the sleep-mode after a predetermined time period of inactivity and/or in response to a sleep user action. Said sleep user action may be folding the handheld device, e.g., by using mechanical hinges of the handheld device.

Providing a sleep-mode is particularly advantageous with respect to saving energy. Further, a sleep-mode is advantageous with respect to preventing too much heat to be produced by the operation of the devices used.

According to a second aspect of the present invention, a touchless user interface control method is provided. The method may comprise providing, using a handheld device according to first aspect of the present invention, a spatial input area serving as a spatial user interface enabling a user person to provide touchless user input to a scene displayed by an essentially stationary display means. The method may comprise observing, using the at least one depth sensing device of the handheld device, the spatial input area and capturing the touchless user input provided by the user person using an input object. The method may comprise generating at least one control command based on the captured touchless user input to modify the displayed scene in accordance with the at least one control command.

According to a third aspect of the present invention, a computer program or a computer-readable medium is provided, having stored thereon a computer program, the computer program comprising instructions which, when the program is executed by a computer, cause the computer to carry out the method of the second aspect of the present invention.

All technical implementation details and advantages described with respect to the first aspect of the present invention are self-evidently mutatis mutandis applicable for the second and third aspects of the present invention and vice versa.

### BRIEF DESCRIPTION OF THE DRAWINGS

The disclosure may be better understood by reference to the following drawings:
- Fig. 1:: A schematic illustration of a first version of a handheld device according to embodiments of the present invention.
- Fig. 2:: A schematic illustration of a second version of a handheld device according to embodiments of the present invention.
- Fig. 3a:: A schematic illustration of a third version of a handheld device according to embodiments of the present invention.
- Fig. 3b:: A schematic illustration of a third version of a handheld device including a visual control aid according to embodiments of the present invention.
- Fig. 4a:: A first schematic illustration of a user interaction according to embodiments of the present invention.
- Fig. 4b:: A second schematic illustration of a user interaction according to embodiments of the present invention.

### DETAILED DESCRIPTION

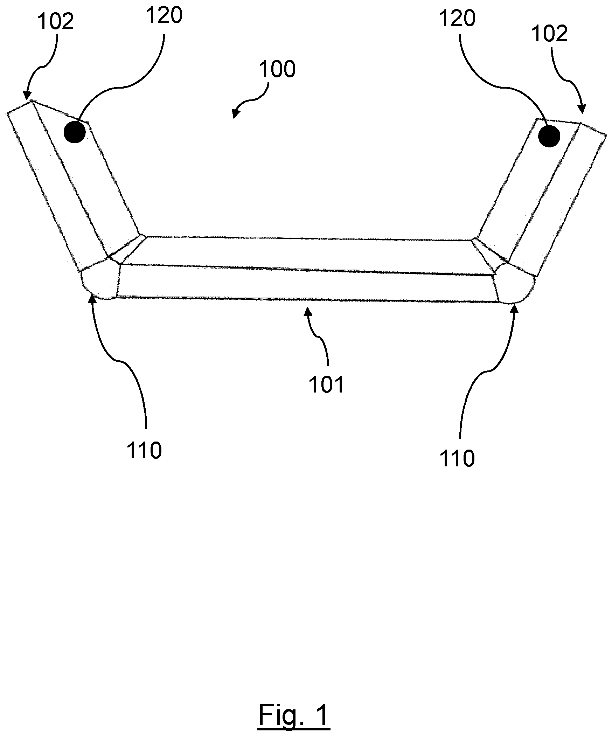

Figure 1 shows a first version of a handheld device 100 comprising two depth sensing devices 120. The handheld device 100 further comprises a base part 101 and two physical framing means 102. The two physical framing means 102 are respectively connected to the base part 101 via a folding mechanism 110. Providing foldable physical framing means 102 is particularly advantageous because the user person 300 may unfold the physical framing means 102 to a predefined unfolding angle, as can be seen in figure 1, such that the physical framing means 102 delimit the spatial input area 130 at least partially. Thus, the user person 300 has an indication of where the spatial input area 130 is located which enhances the usability.

In the particular shown embodiment, the folding mechanism(s) 110 are mechanical folding means formed by a mechanical hinge. An advantage of providing folding mechanism(s) 110 is that the foldable handheld device 100 can be easily carried in a pocket or small bag, making it highly portable. In addition, if the handheld device 100 includes an electronic display, for example by building a visual control aid 140, the screen size of the electronic display can be increased. So user persons 300 can take advantage of the larger screen size when needed without sacrificing portability. In addition, foldable devices in general have improved durability compared to traditionally designed devices because they cover sensitive components to prevent damage. In particular, at least one depth camera 120 can be covered to avoid damaging or contaminating at least one depth camera 120.

Due to the fact that mechanical hinges have a high durability compared to other types of folding mechanisms 110, such as flexible material, they are advantageous. Further, mechanical folding mechanisms 110 do have a clearly recognizable end position in an unfolded state and a clearly recognizable end position in a folded state. Thus, the mechanical hinge is easy to use, allowing for smooth and intuitive folding and unfolding. This makes it easier to use than devices with complicated folding mechanisms. In addition, mechanical hinges are cost-effective, easier and cheaper to manufacture and maintain than more complex hinge mechanisms. It may be provided that the folding mechanism 110, in particular the mechanical hinge, comprises a locking means (not shown). The locking means may be designed such that the handheld device 100 may be locked in a folded state such that only user persons 300 having the permission to unfold are able to unfold the handheld device 110 for making use of it. The locking mechanism may be a combination lock or a mechanical lock which is unlockable using a key. Alternatively of additionally, a biometric unlocking mechanism may be provided, such as a fingerprint sensor and/or a face recognition sensor.

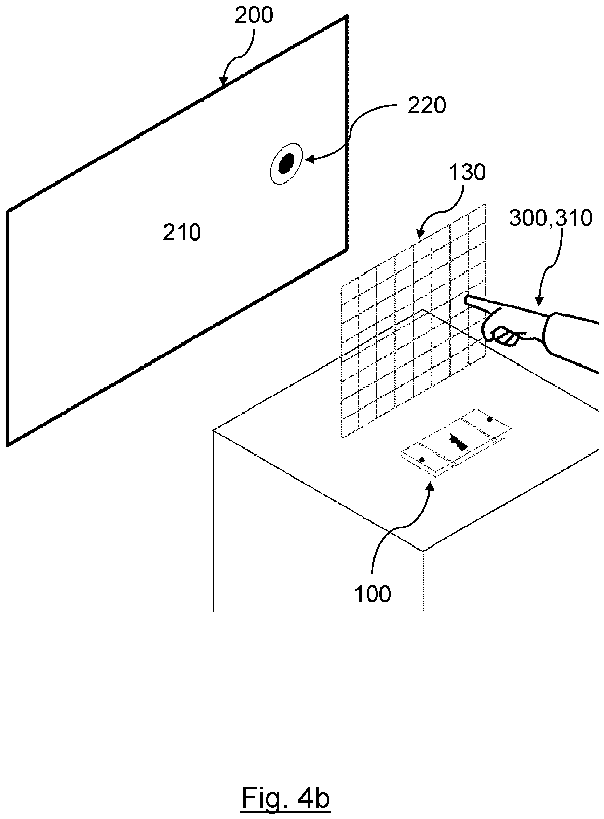

The depth sensing devices 120 observe and provide a spatial input area 130 serving as a spatial user interface enabling a user person 300 to provide touchless user input to a scene 210 displayed by an essentially stationary display means 200 (not shown in this figure, see figure 4b). The depth sensing devices 110 capture the touchless user input provided by the user person 300 using an input object 310 which may in particular be the user's hand. Based on the captured user input, a processing unit may generate at least one control command and modify the displayed scene 210 displayed by the essentially stationary display means 200 in accordance with the at least one control command. The processing unit may be part of the mobile device 100.

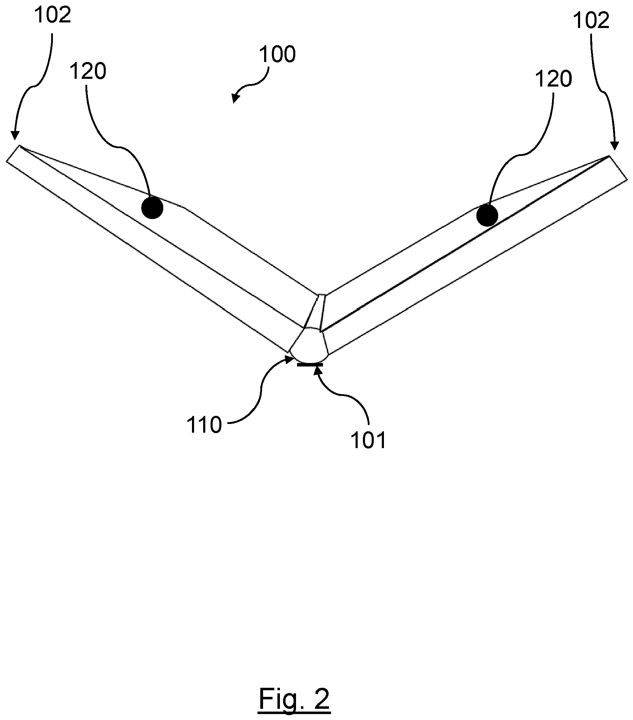

In figure 2, a second version of a handheld device 100 is illustrated. Different than the first version of a handheld device 100 shown in figure 1, the second version only comprises one folding mechanism 110 which is at the same time the base part 101. Due to less stability of the second version when it is used, the first version shown in figure 1 is preferred.

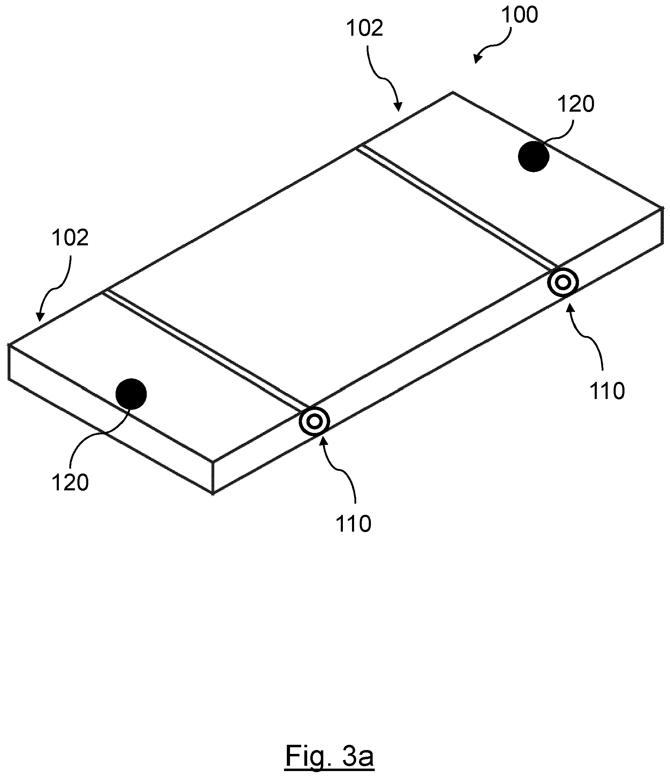

In figure 3a, a third version of a handheld device 100 is shown. The third version of a handheld device 100 is very similar to the first version of a handheld device 100. It only differs in that the folding mechanisms 110 allow the physical framing means 102 to be unfolded such that the angle between each respective physical framing means 102 and the base part 101 is essentially 180 degrees. This increases the stability during usage, in particular when the handheld device 100 is placed on a surface, such as a desk, a table, a stand, a holding structure and/or the like.

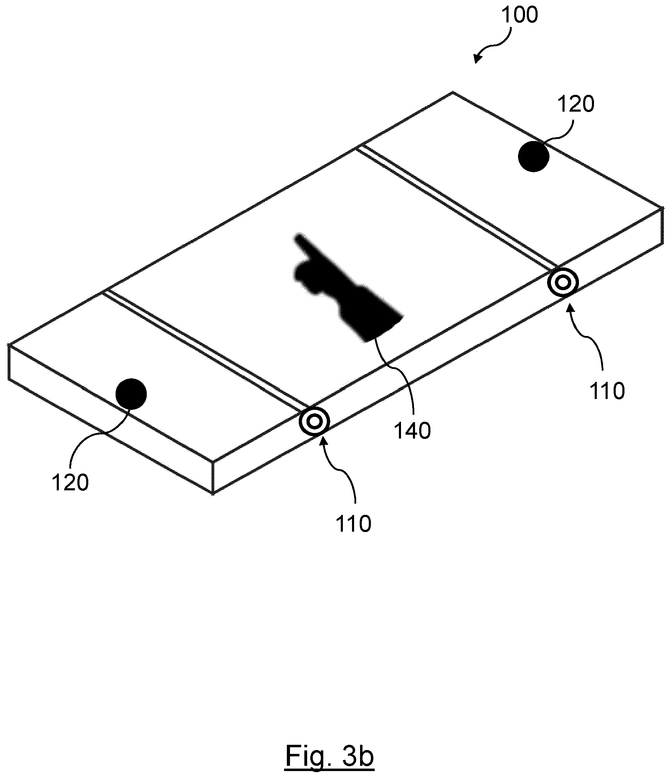

In figure 3b, the handheld device 100 of figure 3a is shown, further including a virtual control aid 140 which is provided by an electronic display of the handheld device 100. The visual control aid 130 provides the user person 300 with an indication of captured user input. For example, the input object 310 may be the user person's hand and the visual control aid 130 may correspondingly be a virtual representation of the user person's hand having the shape of a hand.

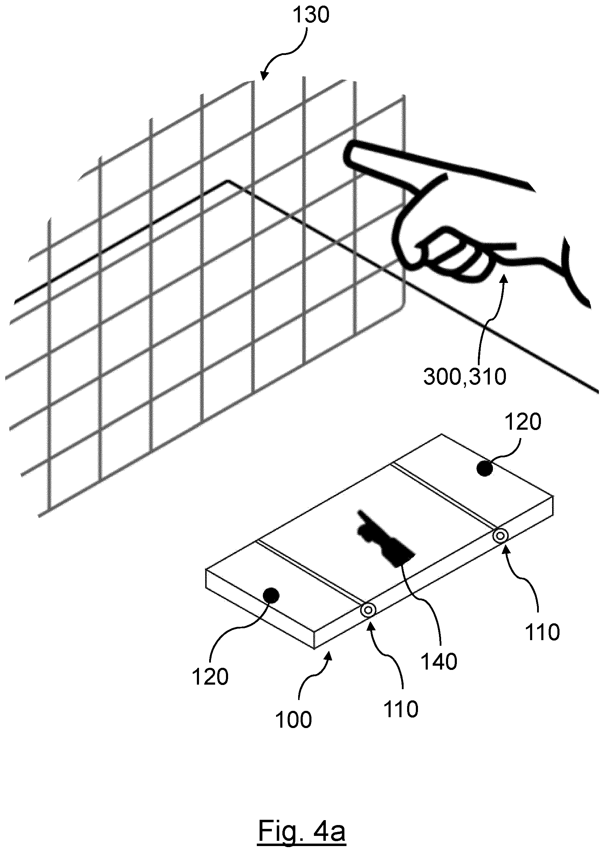

Figure 4a is a zoomed-out illustration in comparison to figure 3b during usage of the handheld device 100. The user person's hand which is the input object 310 in this example, and the spatial input area 130 is depicted additionally. The spatial input area 130 is illustrated as a grid layer for the sake of comprehensibility.

Figure 4b is a further zoomed-out illustration in comparison to figure 4a. It shows the full setting during user interaction, including the handheld device 100 which is placed on a surface providing the spatial input area 130. Further, the input object 310 which is the user person's hand is depicted as well as the essentially stationary display means 200. The essentially stationary display means 200 displays a scene 210 and a hovering pointer 220 which has a position corresponding to a pointing direction of the user person's hand.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

- 100: handheld device
- 101: base part
- 102: physical framing means
- 110: folding mechanism
- 120: depth sensing device
- 130: spatial input area
- 140: visual control aid
- 200: display means
- 210: scene
- 220: pointer
- 300: user person
- 310: input object, e.g., hand

## Claims

1. A handheld device (100) for providing a touchless user interface, the handheld device (100) comprising:
at least one depth sensing device (120) which enables the handheld device (100) to provide a spatial input area (130) serving as a spatial user interface enabling a user person (300) to provide touchless user input to a scene (210) displayed by an essentially stationary display means (200), wherein the at least one depth sensing device (120) is configured to observe the spatial input area (130) and to capture touchless user input provided by the user person (300) using an input object (310);
means configured to generate at least one control command based on captured touchless user input, wherein the at least one control command is configured to cause modifying the displayed scene (210) in accordance with the at least one control command.

2. The handheld device (100) of claim 1, wherein the handheld device (100) has a size that essentially fits into a pocket of a garment, preferably wherein the handheld device's volume is preferably less than 400 cm³, preferably less than 300 cm³, preferably less than 200 cm³, preferably less than 150 cm³, preferably less than 100 cm³, preferably less than 80 cm³, preferably less than 60 cm³.

3. The handheld device (100) of any one of the preceding claims, wherein the handheld device (100) has a weight less than 2 kg, preferably less than 1.5 kg, preferably less than 1 kg, preferably less than 0.7 kg, preferably less than 0.5 kg, preferably less than 0.3 kg, preferably less than 0.2 kg, preferably less than 0.1 kg.

4. The handheld device (100) of any one of the preceding claims, wherein the handheld device (100) is foldable, preferably through a folding mechanism (110).

5. The handheld device (100) of claim 4, wherein the handheld device (100) comprises at least one mechanical hinge that allows the handheld device (100) to be folded.

6. The handheld device (100) of any one of the preceding claims, wherein the handheld device (100) includes at least one base part (101) which is configured to be placed on a surface, such as a desk, a table, a stand, a holding structure and/or the like.

7. The handheld device (100) of any one of the preceding claims, wherein the handheld device (100) comprises at least two physical framing means (102) which at least partially indicate the spatial input area (130) by at least partially framing the spatial input area (130).

8. The handheld device (100) according to claims 6 and 7, wherein the framing means (102) are foldable tower structures which are connected, preferably via hinges, to the base part (101), wherein, optionally, in each of the tower structures, a depth sensing device (120) is integrated or mounted.

9. The handheld device (100) of any one of claims 6-8, wherein the base part (101), at least one of the physical framing means (102) and/or at least one of the tower structures comprises a processing unit including wireless connectivity interface(s) and means for processing captured image data of the at least one depth sensing device (120) in order to generate at least one control command and in order to modify a scene (210) displayed on the essentially stationary display means (200).

10. The handheld device (100) of any one of the preceding claims, wherein the handheld device (100) comprises at least two depth sensing devices (120), each configured for at least partially observing the spatial input area (130) and capturing user input, wherein a combination of the captured data of the at least two depth sensing devices (120) is performed in order to recognize the user input and to generate control command(s) based on the user input, optionally wherein the depth sensing devices (120) are depth cameras.

11. The handheld device (100) of any one of the preceding claims, wherein one or more of the following types of control commands may be generated based on user input:
hovering pointer commands causing modifying the displayed scene (210) by displaying a hovering pointer (220) which overlays the scene (210) in a respective position, preferably wherein a captured user input is determined to be a hovering pointer command if the user person (300) points with at least a portion of the user person's hand within the spatial input area (130);
gesture input commands, such as click input commands, causing modifying the displayed scene (210) in that said scene (210) changes according to the gesture, preferably wherein a captured user input is determined to be a gesture input command if the user person (300) performs a gesture movement with the user person's hand within the spatial input area (130).

12. The handheld device (100) of any one of the preceding claims, wherein the handheld device (100) comprises a visual control aid (140), preferably formed by an electronic display, wherein the visual control aid (140) provides the user person (300) with an indication of captured user input.

13. The handheld device (100) of claim 12, wherein the visual control aid (140) includes a visual indication of the approximate position of the input object (310) and/or the approximate direction in which the input object (310) points, wherein, optionally, the visual control aid (140) includes a visually perceptible virtual representation, preferably illustration, of the input object (310) that the user person (300) uses for providing user input.

14. A computer-implemented touchless user interface control method, the method comprising:
providing, using a handheld device (100) according to one of the preceding claims, a spatial input area (130) serving as a spatial user interface enabling a user person (300) to provide touchless user input to a scene (210) displayed by an essentially stationary display means (200);
observing, using the at least one depth sensing device (120) of the handheld device (100), the spatial input area (130) and capturing the touchless user input provided by the user person (300) using an input object (310);
generating at least one control command based on the captured touchless user input to modify the displayed scene (210) in accordance with the at least one control command.

15. A computer program or a computer-readable medium having stored thereon a computer program, the computer program comprising instructions which, when the program is executed by a computer, cause the computer to carry out the method of claim 14.
